Europäisches Patentamt

**European Patent Office**

Office européen des brevets

(11) Veröffentlichungsnummer: **0 053 839**
**B1**

(12) EUROPÄISCHE PATENTSCHRIFT

(45) Veröffentlichungstag der Patentschrift:
02.10.85

(21) Anmeldenummer: 81110267.2

(22) Anmeldetag: 09.12.81

(51) Int. Cl.⁴: **A 01 B 1/14,** A 01 B 1/22

(54) Handgerät zum Auflockern, Schneiden und Krümeln von Gartenboden.

(30) Priorität: 10.12.80 DE 3046436
03.11.81 DE 8132020 U

(43) Veröffentlichungstag der Anmeldung:
16.06.82 Patentblatt 82/24

(45) Bekanntmachung des Hinweises auf die Patenterteilung:
02.10.85 Patentblatt 85/40

(84) Benannte Vertragsstaaten:
AT BE CH FR GB IT LI NL SE

(56) Entgegenhaltungen:
DE - C - 1 303 552
DE - U - 7 032 388
DE - U - 7 822 114
FR - A - 736 952
FR - A - 2 452 232

(73) Patentinhaber: Bielefelder Küchenmaschinen- und Transportgerätefabrik vom Braucke GmbH, Telgenbrink 105, D-4800 Bielefeld 15 (DE)

(72) Erfinder: vom Braucke, Hans, jun., Karlsstrasse 27, D-4973 Vlotho/Weser (DE)
Erfinder: vom Braucke, Manfred, Telgenbrink 103, D-4800 Bielefeld 15 (DE)
Erfinder: Westerwelle, Dieter, Markusstrasse 9, D-4800 Bielefeld (DE)

(74) Vertreter: Hoefer, Theodor, Dipl.-Ing., Kreuzstrasse 32, D-4800 Bielefeld 1 (DE)

BUNDESDRUCKEREI BERLIN

## Beschreibung

Die Erfindung bezieht sich auf ein Handgerät zum Auflockern, Schneiden und Krümeln von Gartenboden.

Die DE-C-1 303 552 zeigt bereits ein solches Handgerät mit auf V-förmig zueinanderstehenden Lagerachsen angeordneten freidrehenden Zinkensternen. Die Radialmittelebenen dieser Zinkensterne mit im Querschnitt vorzugsweise rautenförmigen Querschnitt mit seitlich liegenden Schneidkanten an jedem Zinken, schneiden sich unter einem spitzen Winkel, so daß die aneinander entlanggleitenden Kanten der gekreuzt ineinandergreifenden Zinken Scherstellen bilden.

Eine solche Ausbildung zeigt wesentliche Vorteile in bezug auf die Zerkleinerung von Klumpen sowie eine vorteilhafte Selbstreinigung aufgrund des scherenartigen Aufeinanderbewegens.

Aufgabe der Erfindung ist es, diese bekannten vorteilhaften Handgeräte, bei denen an jedem Stiel jeweils 2 Zinkensterne frei sich drehen, noch zu verbessern, und zwar dahingehend, daß u. a. die Korrosionsgefahr und die Zahl der Stiele herabgemindert sowie die Lagerführung der Zinkensterne und deren Auswechselbarkeit verbessert wird.

Diese Aufgabe wird bei einem Handgerät der angegebenen Gattung dadurch gelöst, daß sich die Zinkensterne frei um Lagerhülsen drehen, von denen mindestens zwei, von dazwischenliegenden aus Kunststoff gebildeten Abstandshülsen auf Abstand gehalten, zusammen mit diesen umdrehbar und nach Lösung einer endseitigen Vorspannung in Längsrichtung verschiebbar auf einer geraden zentralen Achse aufgereiht sind.

Eine derartige Ausbildung zeigt den Vorteil, daß bei der Anordnung von mehreren Lagerachsenpaaren der Anteil an Metall-Abstandshülsenteilen und damit die Korrosionsgefahr reduziert ist. Diese Vorteile können noch verstärkt werden, wenn erfindungsgemäß vorzugsweise die die Zinkensterne tragenden Lagerhülsen auch aus Kunststoff vorgesehen sind, auf denen die Zinkensterne mit eingesetzten Gleitlagerringen aus selbstschmiedendem Kunststoff od. dgl. frei drehbar lagern.

Dadurch, daß die Lagerhülsen und die Zwischenabstandshülsen auf der zentralen Achse verschiebbar gelagert sind, können sie von der Achse zum Auswechseln von Zinkensternen oder Lagerteilen leicht abgezogen und wieder aufgestreift werden. Dabei ist es erfindungsgemäß bevorzugt, die verschiebbaren Lagerteile (Lagerhülsen, Zwischenabstandshülsen) mittels endseitig angeschraubter Spannmuttern gegeneinander zu verspannen, so daß die Lagerteile auf der zentralen Achse eine starre Einheit bilden, die an einem Stiel angeordnet ist.

Es ist bevorzugt die äußere Mantelfläche der Lagerhülse mit ringförmigen Sammelrinnen und rechtwinklig dazu angeordnet Abführkanäle unterbrochen auszubilden um das einfallende Gut wie Sand od. dgl. beim Einstechen der Zinkensterne in den Boden nach außen abzuführen.

Die Gesamtmontage derartiger Handgeräte ist fertigungsmäßig schnell und einfach vorzunehmen, so daß eine rationelle Fertigung gegeben ist.

Weitere Merkmale ergeben sich aus den Unteransprüchen.

Auf der Zeichnung sind Ausführungsbeispiele der Erfindung dargestellt. Es zeigt

Fig. 1 eine Seitenansicht eines Handgerätes mit im senkrechten Schnitt dargestelltem Stiel und daran gelagertem Zinkenstern;

Fig. 2 einen waagerechten Schnitt durch denselben Stiel und mehrere Zinkensternpaare, deren V-förmig zueinander stehende Lager auf einer zentralen Achse angeordnet sind;

Fig. 3 eine Explosionsdarstellung mit Lagern und Zwischenführungslagern mit einer Aufnahmebohrung für die zentrale Achse;

Fig. 4 einen Querschnitt einer abgeänderten runden Achse und aufgesteckter Lagerhülse mit Nut-Feder Verbindung;

Fig. 5 eine perspektivische Ansicht einer abgeänderten Lagerhülse mit mantelseitigen Nuten und

Fig. 6 einen senkrechten Schnitt durch die Lagerhülse nach Fig. 5.

An einem Stiel 10 ist eine zentrale Achse 11 befestigt, beispielsweise angeschweißt, die einen eckigen Querschnitt zeigt. Auf diese zentrale Achse sind V-förmig zueinanderstehende, paarweise in korrespondierenden Winkeln (spitzen Winkeln) angeordnete Lagerhülsen 12 aus hartem Kunststoff aufgeschoben, zwischen denen Führungslager oder Abstandshülsen 13 ebenfalls aus hartem Kunststoff eingeschaltet sind, deren Seitenflächen ebenfalls V-förmig sich gegenüberliegen und vollflächig an den Seitenflächen der Lagerhülsen 12 anliegen. Dazu haben die Seitenflächen der Führungslager 13 geringe Abstufungen.

Entsprechend der eckigen Formgebung der zentralen Achse 11 (quadratisch) sind die Mittelöffnungen 12a der Lagerhülsen 12 und Führungslager 13 sowie Endlager 14 ebenfalls eckig ausgebildet, so daß diese Lagerteile 12, 13, 14 zwar in Längsrichtung der zentralen Achse 11 verschiebbar, jedoch auf dieser nicht drehbar gelagert sind. Durch Endmuttern 15, die auf Endgewinde 16 der zentralen Achse 11 drehbar gelagert sind, sind die vorgenannten Lagerteile 12, 13, 14 miteinander zu einer weitgehend starren Einheit verspannt. Dabei liegen die äußeren Seitenflächen der Endlager 14 rechtwinklig an den Endmuttern 15 jeweils an.

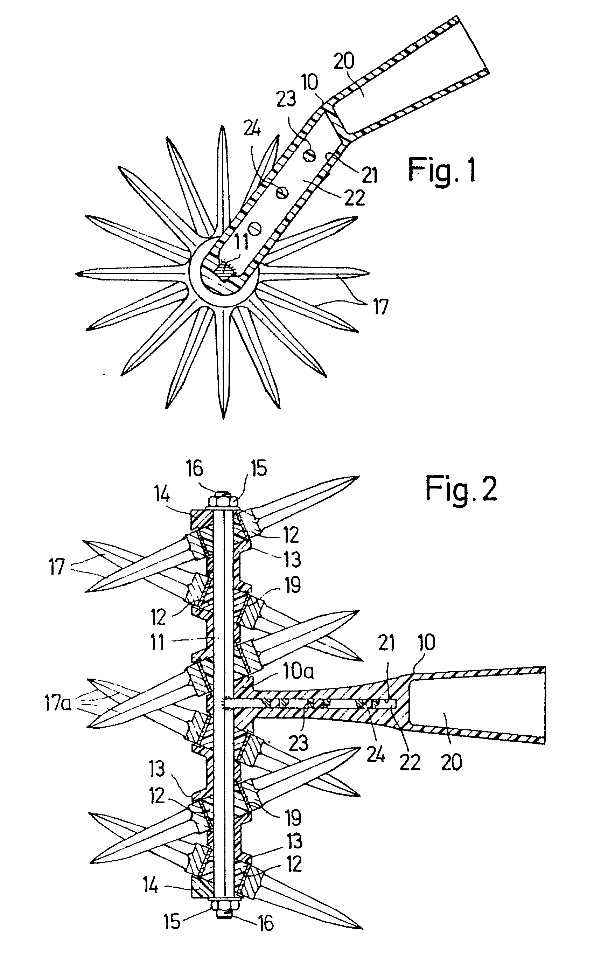

Die frei drehbaren Zinkensterne 17, beispielsweise aus Leichtmetall wie Aluminium, sind jeweils im Querschnitt rautenförmig und mit seitlichen Schneidkanten 17a versehen und derart zueinander auf den Lagerhülsen 12 gelagert, daß sie aneinandergleitend gekreuzt einseitig ineinandergreifen und dabei paarweise vorteilhafte Scherstellen bilden. Die Scherstellen liegen bei benachbarten Zinkensternen 17 (vergl. Fig. 2) wechselweise versetzt sich gegenüber.

Dazu hat jeder Zinkenstern 17 eine zentrale Bohrung 18, in die ein Gleitlagerring 19, z. B. aus selbstschmierendem Kunststoff, fest eingesetzt ist, der auf der runden Außenfläche (Mantel) der Lagerhülse 12 frei drehbar lagert.

Die Führungslager 13 zeigen auf ihrer breiteren Außenfläche eine Mulde 13b, die einerseits eine Führungsfläche für Gras od. dgl. bildet und andererseits weitgehend verhindert, daß sich Gras od. dgl. unmittelbar in die Spalte des Führungslagers 13 und Lagers 12 einwickelt; dieses wirkt damit einem Festsetzen der Zinkensterne 17 entgegen.

Die Anordnung der Zinkensterne 17 mit ihren Lagern 12 auf der zentralen Achse 11 gibt dem Handgerät insbesondere auch bei Bearbeitung eines verhärteten Bodens eine vorteilhafte Starrheit.

Die einzelnen Lagerteile 12, 13, 14 sowie die Zinkensterne 17 lassen sich einfach montieren und wieder lösen, da die Endschrauben 15 ein Aufstecken und Miteinanderverspannen der Einzelteile und deren Lösen erleichtert. Die Lagerteile sind gegen Verdrehung gesichert, während die Zinkensterne 17 mit den Lagerhülsen 12 und Gleitlagerring 19 Kunststoff auf Kunststoff gleiten.

Der vorzugsweise aus hartem Kunststoff bestehende Stiel 10 mit seiner Tülle 20 weist achsseitig in seiner Längsrichtung einen länglichen flachen Hohlraum 21 auf, in den eine Verstärkungsplatte 22 aus Metall eingespritzt ist, die mit mittleren Bohrungen 23 für eine Kunststoffbrückenbildung ausgestattet ist. Die zentrale Achse 11 ist mit dieser Verstärkungsplatte 23 durch stirnseitige Verschweißung starr verbunden, so daß Stiel und Achse 11 eine unlösbare Einheit bilden.

Die Herstellung und Montage des Handgerätes kann beispielsweise so erfolgen, daß zunächst die Verstärkungsplatte 22 in der Mitte der zentralen Achse 11 angeschweißt, angeschraubt od. dgl. wird. Dann wird der Kunststoffüberzug unter Bildung eines im Querschnitt V-förmigen Zwischenführungslagers 10a sowohl um die zentrale Achse 11 als auch um die Verstärkungsplatte gespritzt, wobei eine Tülle 20 gebildet wird und der flüssige Kunststoff durch die Bohrungen 23 fließt und dort Brücken 24 zur Versteifung und zweckmäßigen Festlegung von Kunststoffüberzug und Verstärkungsplatte 22 bildet.

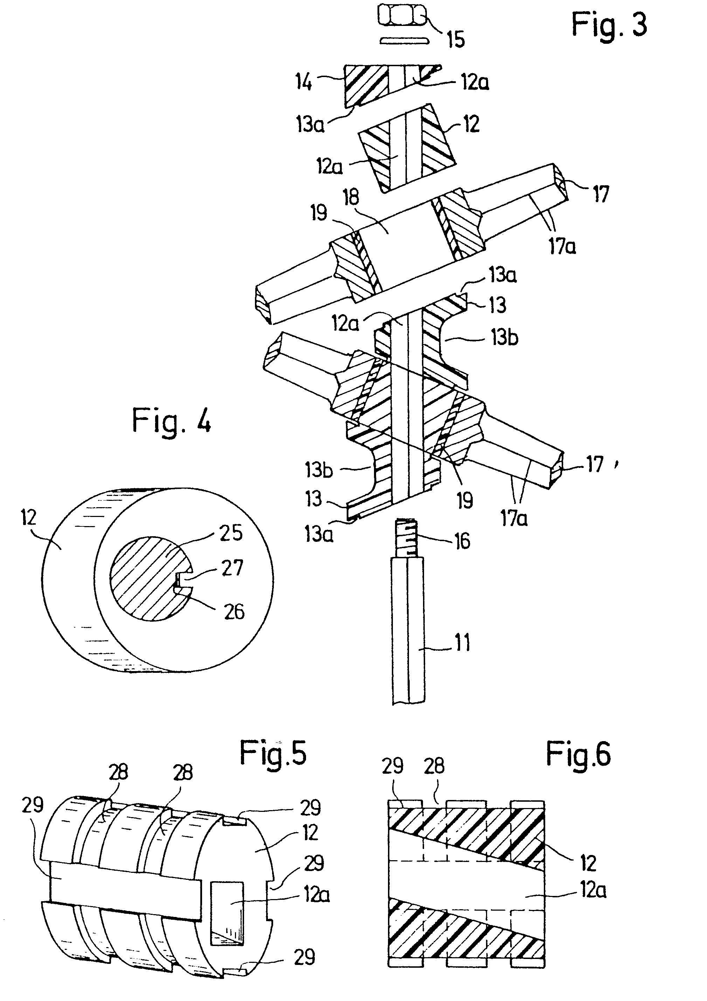

Dann werden von einer und der anderen Seite die Lagerteile (Lagerhülsen 12 mit aufgesetzten Zinkensternen 17, Zwischenführungslager 13, Endlager 14) aufgeschoben und endseitig mittels Spannmuttern 15 auf den Gewinden 16 mit- und gegeneinander verspannt (vergl. Fig. 3).

Die wesentlichen Teile des Handgerätes sind weitgehend aus Kunststoff, um korrosionsfähiges Metall zu vermeiden.

Es liegt dabei im Rahmen der Erfindung, auch die zentrale Achse 11 und die Zinkensterne 17 aus widerstandsfähigem harten Kunststoff herzustellen.

Bei dem nach Fig. 4 der Zeichnung dargestellten Ausführungsbeispiel ist anstelle der mehrkantigen zentralen Achse 11 eine runde Achse 25 vorgesehen, die eine, über ihre gesamte Länge sich erstreckende, Nut 26 aufweist.

Dabei ist die jeweilige Mittelöffnung 12a mit einem Steg 27 ausgebildet, so daß die Lagerhülse 12, das Führungslager 13 und das Endlager 14 mit der Achse 25 unter Nut-Federverbindung gegen ein Verdrehen gesichert sind.

Auch kann anstelle der Nut 26 auf der Rundachse 25 ein Steg, Nocken od. dgl. angeordnet sein, wobei dann in den jeweiligen Mittelöffnungen 12a entsprechende Ausnehmungen angeformt sind und die Teile 12, 13, 14 auf der Rundachse 25 ein Verdrehen verhindern.

Um während der Bearbeitung des Bodens den einfallenden Sand od. dgl. zwischen Gleitring 19 und Lagerhülse 12 herausführen zu können und um damit die Reibung zu verringern, ist die Mantelfläche der Lagerhülse 12 von ringförmigen Sammelrinnen 28, Nuten od. dgl unterbrochen, in denen sich der Sand während der Drehbewegung der Zinkensterne 17 von der Reibungsfläche sammelt, vergl. Fig. 5 und 6.

Diese ringförmigen Sammelrinnen 28 münden in rechtwinklig dazu angeordneten Abführkanälen 29, welche am Umfang der Lagerhülsen 12 verteilt angeordnet sind. Im Ausführungsbeispiel sind vier Abführkanäle 29 angeordnet. Der in den Sammelrinnen 28 angesammelte Sand od. dgl. wird über die Abführkanäle 29 nach außen geführt.

Eine derartig ausgebildete Lagerhülse vermindert dadurch die Reibung der sich drehenden Zinken, was sich vorteilhaft auf die Funktion und die Lebensdauer günstig auswirkt.

## Patentansprüche

1. Handgerät zum Auflockern, Schneiden und Krümeln von Gartenboden od. dgl., mit auf V-förmig zueinanderstehenden Lagerachsen freidrehenden Zinkensternen (17), deren Radialmittelebenen sich unter einem spitzen Winkel schneiden, so daß die aneinander entlanggleitenden Kanten der gekreuzt ineinandergreifenden Zinken Scherstellen bilden, dadurch gekennzeichnet, daß sich die Zinkensterne (17) frei um Lagerhülsen (12) drehen, von denen mindestens zwei, von dazwischenliegenden aus Kunststoff gebildeten Abstandshülsen (13) auf Abstand gehalten, zusammen mit diesen undrehbar und nach Lösung einer endseitigen Vorspannung in Längsrichtung verschiebbar auf einer geraden zentralen Achse (11) aufgereiht sind.

2. Handgerät nach Anspruch 1, dadurch gekennzeichnet, daß die zentrale Achse (11) eckig ausgebildet ist und die Lagerhülsen (12) sowie die Abstandshülsen (13) mit zentralem eckigem Hohlraum (Mittelöffnung 12a) versehen sind.

3. Handgerät nach Anspruch 1, dadurch gekennzeichnet, daß die zentrale Achse (11) als Rundachse (25) mit in axialer Richtung versehener Nut (26) und die Mittelöffnungen (12a) der Lagerhülsen (12), Abstandshülsen (13) und zwei Endhülsen (14) mit einem entsprechenden Steg (27) ausgebildet sind.

4. Handgerät nach den Ansprüchen 1 bis 3, dadurch gekennzeichnet, daß die Lagerhülsen (12), die Abstandshülsen (13) und die Endhülsen (14) aus Kunststoff gebildet sind, die auf der Achse (11) mit endseitigem Gewinde (16) und Mutter (15) verspannt gehalten sind.

5. Handgerät nach den Ansprüchen 1 bis 4, dadurch gekennzeichnet, daß die Zinkensterne (17) jeweils mittels eines in ihre zentrale Bohrung (18) eingesetzten Gleitlagerringes (19) aus selbstschmierendem Kunststoff auf der Abstandshülse (13) freidrehend gelagert sind.

6. Handgerät nach den Ansprüchen 1 bis 5, dadurch gekennzeichnet, daß die Abstandshülsen (13) jeweils an ihren Seitenflächen Abstufungen (13a) von geringer Höhe aufweisen, mit denen sie an der Seitenfläche der benachbarten Lagerhülse (12) anliegen und auf ihrer breiteren äußeren Ringfläche mit einer Mulde (13b) ausgestattet sind.

7. Handgerät nach den Ansprüchen 3 bis 6, dadurch gekennzeichnet, daß die Endhülsen (14) im Querschnitt dreieckförmig ausgebildet sind und mit ihrer Außenseitenfläche jeweils gegen eine Endmutter (15) als Spannmutter anliegen.

8. Handgerät nach den Ansprüchen 1 bis 7, dadurch gekennzeichnet, daß eine Verstärkungsplatte (22) aus Metall an der zentralen Achse (11, 25) starr befestigt ist, die mit einem aus hartem Kunststoff zur Bildung einer Tülle (20) umgeben ist und an seiner Befestigungsstelle an der zentralen starren Achse (11, 25) mit einem in seiner Längsrichtung verlaufenden länglichen flachen Hohlraum (21) versehen ist, in dem die Verstärkungsplatte aus Metall (22) eingespritzt ist.

9. Handgerät nach Anspruch 8, dadurch gekennzeichnet, daß die Verstärkungsplatte (22) stirnseitig mit der zentralen Achse (11, 25) verschweißt ist und mit dem die Tülle (20) bildenden Kunststoffüberzug unter Formung eines festen Zwischenführungslagers (10a) umspritzt und die Verstärkungsplatte (22) mit Bohrungen (23) zur Kunststoffbrückenbildung ausgestattet ist.

10. Handgerät nach den Ansprüchen 1 bis 4, dadurch gekennzeichnet, daß die äußere Mantelfläche der Lagerhülse (12) durch Sammelrinnen (28) und Abführkanäle (29) unterbrochen ausgebildet ist, wobei die Sammelrinnen (28) als Nuten, Rillen od. dgl. ringförmig in der Mantelfläche der Lagerhülse (12) verlaufen und die Abführkanäle (29) rechtwinklig in die Sammelrinnen (28) einmünden und parallel zur zentralen Achse (11) der Lagerhülse (12) verlaufend in deren Mantelfläche angeordnet sind.

**Claims**

1. A hand tool for breaking-up, cutting and crumbling garden soil or the like, having pronged wheels (17) which are freely rotatable on bearing axles which are arranged in V-shaped disposition relative to one another, the central radial planes of wheels intersecting each other at an acute angle so that the edges of the prongs which slide along one another and which interengage in crosswise manner, from shearing points, characterised in that the pronged wheels (17) rotate freely about bearing sleeves (12), at least two of which bearing sleeves (12) are kept apart by spacer sleeves (13) which are located between bearing sleeves (12) and which spacer sleeves (13) are formed from plastics material, and said at least two bearing sleeves (12) are disposed on a straight central shaft (11) together with said sleeves (13) so as to be non-rotatable and so as to be longitudinally displaceable upon release of an end applied pre-stress.

2. A hand tool according to claim 1, characterised in that the central shaft (11) is formed in an angular shape and the bearing sleeves (12) and the spacer sleeves (13) are provided with a central angular aperture (12a).

3. A hand tool according to claim 1, characterised in that the central shaft (11) is constructed as a round sectioned shaft (25) with a groove (26) extending in an axial direction and the central apertures (12a), the bearing sleeves (12), the spacer sleeves and two end spacers (14) are provided with a corresponding flange (27).

4. A hand tool according to claim 1 to 3, characterised in that the bearing sleeves (12), the spacer sleeves (13) and the end spacers (14) are made of plastics material and are clamped onto the shaft (11) by means of terminal threads (16) and nuts (15).

5. A hand tool according to claims 1 to 4, characterised in that the pronged wheels (17) are each mounted on the spacer sleeves (13) by means of bearing rings (19) made of selflubricating plastics material set into their central apertures (18).

6. A hand tool according to claims 1 to 5, characterised in that the spacer sleeves (13) each have small shoulders (13a) on their side surfaces by means of which they lie against the side surfaces of the neighbouring bearing sleeves (12) and are provided with a trough (13b) on their wider outer annular surfaces.

7. A hand tool according to claims 1 to 6, characterised in that the end spacers (14) are shaped to have a triangular cross-section and each lie with their outer side surfaces against an end nut (15) as a tensioning nut.

8. A hand tool according to claims 1 to 7, characterised in that a reinforcing plate (22) of metal is rigidly fixed to the central shaft (11, 35), is surrounded by a stem (10) of hard plastics material to form a shaft socket (20) and is provided, at its point of attachment to the central rigid shaft (11, 25), in an elongate flat hollow cavity (21) running in its longitudinal direction; the metal reinforcing plate (22) being disposed in this cavity by injection moulding of the plastics material.

9. A hand tool according to claim 8, characterised in that the reinforcing plate (22) is welded at its front end to the central shaft (11, 25) and has a plastics material coating moulded therearound which forms the socket (20) and thereby forming a fixed intermediate guide bearing (10a); and the reinforcing plate (22) is provided with holes (23) to form bridges made of plastics material.

10. A hand tool according to claims 1 to 4, characterised in that the outer covering surfaces of the bearing sleeve (12) are divided up by collecting channels (28) and discharge channels (29), the collecting channels (28) of an annular shape running in the covering surface of the bearing sleeve (12) as grooves, channels or the like and the discharge channels (28) entering the collecting channels (28) at right angles and running in the covering surface parallel to the central shaft (11) of the bearing sleeves.

**Revendications**

1. Outil à main pour l'ameublissement, le coupage et l'émottage du sol des jardins ou similaire, comportant des étoiles de dents (17) tourant librement sur des axes de palier placés en »V« l'un par rapport à l'autre, étoiles dont les plans médians radiaux se coupent sous un angle aigu de sorte que les arêtes des dents engrenant entre elles de facon croisée, arêtes qui glissent les unes le long des autres, forment des points de cisaillement, caractérisé par le fait que les étoiles de dents (17) tournent librement autour de douilles de palier (12) dont au moins deux sont maintenues espacées par des douilles d'espacement (13) situées entre elles et formées de matières synthétiet sont alignées en même temps que celles-ci sur un axe central rectiligne (11), sans pouvoir tourner et en pouvant coulisser en direction longitudinale après relâchement d'une précharge terminale.

2. Outil à main selon la revendication 1, caractérisé par le fait que l'axe central (11) est conçu sous forme angulaire et que les douilles de palier (12), ainsi que les douilles d'espacement (13) sont munies d'une cavité angulaire centrale ouverture centrale (12a).

3. Outil à main selon la revendication 1, caractérisé par le fait que l'axe central (11) est conçu sous forme d'axe rond (25) muni d'une rainure (26) en direction axiale et que les ouvertures centrales (12a) des douilles de palier (12), des douilles d'espacement (13) et de deux doilles terminales (14) sont munies d'une nervure correspondante (27).

4. Outil à main selon les revendications 1 à 3, caractérisé par le fait que les douilles de palier (12), les douilles d'expacement (13) et les douilles terminales (14) sont formées de matière synthétique et sont maintenues serrées sur l'axe (11) par un filetage terminal (16) et un écrou (15).

5. Outil à main selon les revendications 1 à 4, caractérisé par le fait que les étoiles de dents (17) sont chaque fois montées de manière à tourner librement sur la douille d'espacement (13) au moyen d'une bague de palier lisse (19) en matière synthétique autolubrifiante insérée dans leur perforation centrale (18).

6. Outil à main selon les revendications 1 à 5, caractérisé par le fait que les douilles d'espacement (13) présentent chacune, sur leurs faces latérales, des gradins (13a) de petite hauteur par lesquels elles s'appliquent contre la face latérale de la douille de palier (12) adjacente et que sur leur surface annulaire extérieure plus large, elles sont munies d'un creux (13b).

7. Outil à main selon les revendications 1 à 6, caractérisé par le fait que les douilles terminales (14) sont conçues sous forme triangulaire dans leur section et que par leur face latérale extérieure, elles s'appliquent chacune contre un écrou terminal (15) en tant qu'écrou de serrage.

8. Outil à main selon les revendications 1 à 7, caractérisé par le fait qu'une plaque de renforcement (22) en métal est fixée rigidement à l'axe central (11, 25) cette plaque étant entourée de matière synthétique dure de manière à former une gaine (20) et étant munie, à son point de fixation à l'axe central rigide (11, 25), d'une cavité allongée aplatie (21) située dans sa direction longitudinale et dans laquelle la plaque de reforcement en métal (22) est moulée par injection.

9. Outil à main selon la revendication 8, caractérisé par le fait que le plaque de reforcement (22) est soudée du côté frontal à l'axe central (11, 25) et qu'elle est entourée par injection du revêtement de matière synthétique formant la gaine (20), avec formation d'un palier de guidage intermédiaire ferme (10a) et que la plaque de renforcement (22) est munie de perforations (23) pour la formation de ponts de matière synthétique.

10. Outil à main selon les revendications 1 à 4, caractérisé par le fait que la surface latérale extérieure de la douille de palier (12) est interrompue par des gorges collectrice (28) et des canaux d'évacuation (29), les gorges collectrices (28) étant dirigées en anneau dans la surface latérale de la douille de palier (12) sous forme de rainures, de cannelures etc .. et les canaux d'évacuation (29) débouchant à angle droit dans les gorges collectrices (28), et sont disposés, dans une direction parallèle à l'axe central (11) de la douille de palier (12), dans la surface latérale de celle-ci.

0 053 839

Fig. 1

Fig. 2

7

Fig. 3

Fig. 4

Fig. 5

Fig. 6

9